# EUROPEAN PATENT SPECIFICATION

(11) **EP 0 473 944 B1**
(45) Date of publication and mention of the grant of the patent: **17.01.1996**
(21) Application number: 91113027.6
(22) Date of filing: 02.08.1991
(51) Int. Cl.: B29C 45/16

(54) **Apparatus and method for controlling injection from a plurality of injection units into one mould**
Vorrichtung und Verfahren zur Steuerung des Einspritzens aus mehreren Spritzeinheiten in eine Form
Dispositif et procédé pour le contrôle de l'injection à partir de plusieurs unités d'injection dans un moule

(30) Priority: 04.08.1990 JP 207190/90
(43) Date of publication of application: 11.03.1992
(73) Proprietor: NISSEI JUSHI KOGYO KABUSHIKI KAISHA, Hanishina-gun Nagano-ken (JP)
(72) Inventor: Tatsuno, Michihiro, Nissei Jushi Kogyo K. K., Hanishina-gun, Nagano-ken (JP); Shioiri, Takayoshi, Nissei Jushi Kogyo K. K., Hanishina-gun, Nagano-ken (JP)
(74) Representative: Sunderland, James Harry

(56) References cited:
- DE-B- 1 021 567
- JP-A-63 262 212
- US-A- 3 985 484
- US-A- 4 318 874
- PATENT ABSTRACTS OF JAPAN vol. 7, no. 153 (M-226)(1298) 5 July 1983 & JP-A-58 062 029 (TOSHIBA KIKAI K.K.)
- PATENT ABSTRACTS OF JAPAN vol. 12, no. 1 (M-656)(2848) 6 January 1988 & JP-A-62 167 022 (MITSUBISHI HEAVY IND LTD)

## Description

The present invention relates to an injection molding machine for performing molding with a plurality of injection apparatuses, and to the monitoring of such a machine.

An injection molding machine in which different materials to be molded can be injected into a cavity of a single injection mold to fill the cavity so that a laminated sandwich molded product, a multicolour molded product and the like are manufactured is known in, for example, Japanese Patent Publication Nos. 63-44047 and 41-16794.

When the sandwich molded product is manufactured, the filled state of precedently injected materials to be molded influences subsequent injection and filling conditions greatly. Accordingly, in order to manufacture the molded product stably, it is necessary to balance properly the rheology characteristics of the materials to be molded on the surface and core sides of the product and to control the molding conditions for controlling the states of flow of the materials precisely. Therefore, for example, when a molding condition such as a set velocity, a set pressure or the like in one injection apparatus which performs an injection and filling operation precedently (is changed), the molding condition of the other injection apparatus which performs injection and filling operation subsequently is required to be changed.

The data usually obtained in a molding operation is detected by and relates to respective individual injection apparatuses. Thus, the individual operation state of an individual injection apparatus can be grasped or detected exactly, but relationships concerning the molded state in the mold and the molded product cannot be grasped exactly and easily. Accordingly, modification of molding conditions is in practice made in a trial and error manner, with an operator confirming the effects on actual molded products.

However, since it is necessary to grasp a plurality of injection operations in relation to each other in the manufacturing of a laminated sandwich molded product, a multicolour molded product or the like, reliance upon the overall judgement of an operator, depending on the experience of the operator, is a limitation and represents a difficulty in factory production or the like in which various molded products are manufactured successively. Further, an injection molding machine having a plurality of injection apparatuses suffers a problem in that exact setting and correction of the molding conditions is difficult and the investigation of causes of molding failure by data analysis is also difficult.

Patent Abstracts of Japan, Vol. 7, Number 153 (M-226) (1298), July 5, 1983, JP-A-58 62029, discloses an injection molding machine in which two injection apparatuses inject material to be molded into a single mold. Means are provided for detecting screw positions of the injection apparatuses individually, and an arithmetic unit is provided to calculate the injection amount from the positions of the screws.

According to the present invention there is provided a method of monitoring operation of an injection molding machine in which different materials to be molded are injected into a cavity of a single mold from a plurality of injection apparatuses to fill the cavity so that molding is performed, the method comprising detecting predetermined physical quantities relating to operations of the injection apparatuses in the molding operation successively, and calculating characteristic data by taking a sum total of the detected physical amounts, and displaying together in graphical form the characteristic data and individual data relating to the detected physical quantities.

According to the present invention there is also provided an injection molding machine in which different materials to be molded are injected into a cavity of a single mold from a plurality of injection apparatuses of the machine, to fill the cavity so that molding is performed, the machine comprising:-
means for detecting predetermined physical quantities relating to operations of each of the injection apparatuses individually,
means operable to calculate characteristic data by taking a sum total of the detected physical quantities, and
means operable to display together in graphical form the characteristic data and individual data relating to the detected physical quantities.

An embodiment of the present invention can provide an injection molding machine equipped with means capable of grasping settings and changed results of molding conditions to make exact setting thereof and performance of setting operations easy and quick, to thereby eliminate dispersion by operator and contribute to improvement of operation efficiency and achievement of high-quality molding even when different materials are injected into a cavity of a single mold from a plurality of injection apparatuses to fill the cavity so that molding is performed.

Further, an embodiment of the present invention can provide an injection molding machine equipped with means capable of enabling representation of a complicated molding process with overall data which can be utilised effectively for the investigation of the cause of an inferior product, the analysis of the molding process, the design of a new mold or the like.

An embodiment of the present invention can provide a method of monitoring operation of an injection molding machine which provides that settings and changed results of molding conditions can be easily and quickly grasped, to facilitate exact setting and performance of setting. This can allow waste to be reduced and can contribute to improved operation efficiency and the achievement of high-quality molding even when different materials are injected into a cavity of a single mold from a plurality of injection apparatuses to fill the cavity so that molding is performed.

An embodiment of the present invention can provide a method of monitoring operation of an injection molding machine capable of reflecting a complicated molding process in relevant and readily assimilable form, which can be effectively utilised for investigation of the cause of an inferior product, analysis of the molding process, design of a new mold, etc.

In accordance with an embodiment of the present invention predetermined physical quantities are detected, for example filling velocities V1, V2 and V3, relating to operations of a plurality of injection apparatuses 1, 2 and 3 successively when different materials to be molded are injected into a cavity of a single mold 4 by the plurality of injection apparatuses 1, 2 and 3 to fill the cavity so that molding is performed, characteristic data Dv concerning the sum total of the detected filling velocities V1, V2 and V3 is calculated, and the characteristic data Dv is displayed or recorded.

The characteristic data can be correlated to time t or to the total quantity Q of material filled into the mold 4. In the former case, a display may be presented with time as the abscissa axis, in the latter case with quantity Q as the abscissa axis.

Thus, the filling velocities V1, V2 and V3 which are the predetermined physical quantities relating to the operations successively detected from the injection apparatuses 1, 2 and 3 are all added to obtain the characteristic data Dv concerning the sum total of the filling velocities V1, V2 and V3. When the characteristic data Dv is displayed (data processing) in the form of a graph, since the characteristic data Dv includes information of the actual filling state of the mold 4 the data can be grasped collectively and setting of the molding condition and data analysis can be made.

Reference is made, by way of example, to the accompanying drawings, in which:-
Fig. 1 is a display pattern diagram of characteristic data obtained in accordance with an embodiment of the present invention;
Fig. 2 is a display pattern diagram of other characteristic data obtained in accordance with an embodiment of the present invention;
Fig. 3 schematically illustrates utilisation of the characteristic data obtained in accordance with an embodiment of the present invention; and
Fig. 4 is a block system diagram showing a main portion of a control system of an injection molding machine capable of implementing the data processing method.

An exemplary embodiment of the present invention will now be described in detail with reference to the accompanying drawings.

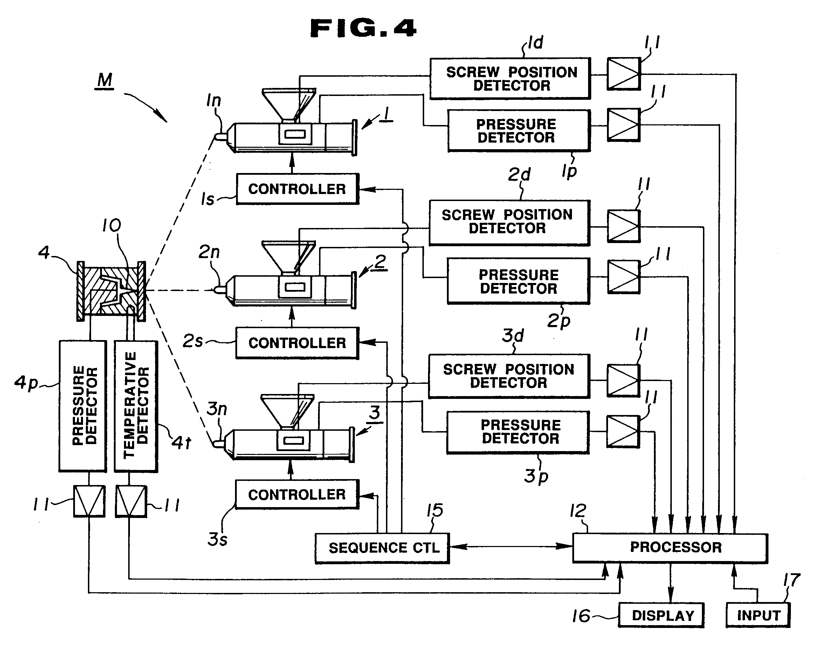

First of all, configuration of a control system of an injection molding machine will be described with reference to Fig. 4.

An injection molding machine M includes three injection apparatuses 1, 2 and 3 and a single mold 4. Nozzle portions 1n, 2n and 3n disposed at the top ends of the injection apparatuses 1, 2 and 3 are disposed so that the nozzle portions can be connected to a common sprue portion 10.

The injection apparatuses 1, 2 and 3 include screw position detectors 1d, 2d and 3d for detecting screw positions which are physical quantities relating to operation of each of the injection apparatuses, and pressure detectors 1p, 2p and 3p for detecting injection pressures P1, P2 and P3 which are physical quantities relating to operation of each of the injection apparatuses, respectively. The detectors 1d, ... and 1p, ... are connected to a processor 12 through amplifiers 11, ... and 11, ... On the other hand, the mold 4 is provided with a temperature detector 4t for detecting a temperature and a pressure detector 4p for detecting a pressure which are physical quantities relating to the mold 4, and both of the detectors are also connected to the processor 12 (through amplifiers 11).

Further, each of the injection apparatuses 1, 2 and 3 is provided with an actuator (not shown) for driving the screw included in each of the injection apparatuses, and each of the actuators is controlled by a controller 1s, 2s and 3s. The controllers 1s, 2s and 3s are connected through a sequence controller 15 to the processor 12.

Furthermore, the processor 12 is connected to a display unit 16 and an input unit 17.

Accordingly, detected results of the detectors 1d, 2d, 3d, 1p, 2p, 3p, 4t and 4p are supplied to the processor 12 and the feedback control system in which the controllers 1s, 2s and 3s are controlled by the processor 12 and the sequence controller 15 is configured. Further, molding conditions and the like can be input by the input unit 17 and various data can be displayed by the display unit 16.

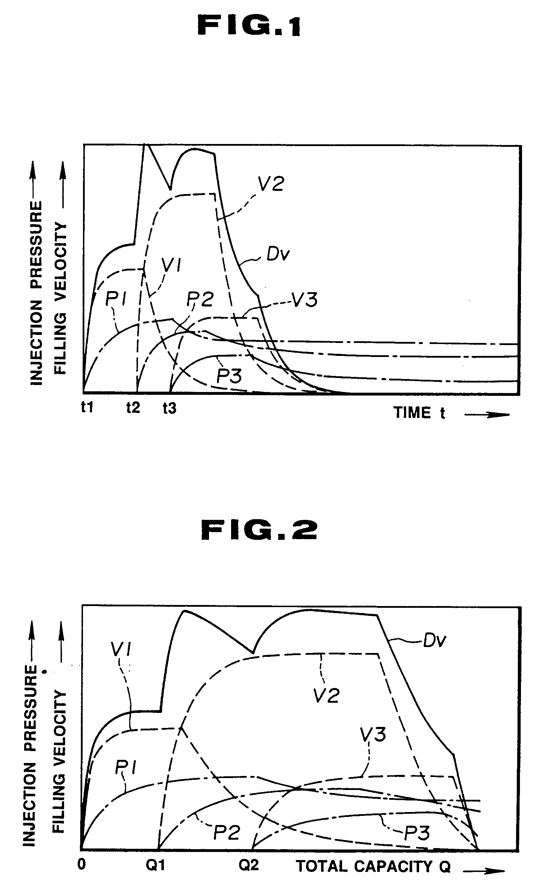

Features according to this embodiment of the present invention will now be described with reference to Figs. 1 to 3.

In a molding operation, the screw positions and the injection pressures P1, P2 and P3, which are physical quantities relating to the operations of the injection apparatuses 1, 2 and 3, are detected successively or at intervals of predetermined times by the screw position detectors 1d, 2d and 3d and the pressure detectors 1p, 2p and 3p, respectively. The detected screw position signals are converted into the screw velocities - that is, the filling velocities V1, V2 and V3 of material to be molded. The filling velocities V1, V2 and V3 are displayed by the display unit 16 individually and the injection pressures P1, P2 and P3 are displayed by the display unit 16 directly.

Fig. 1 diagrammatically represents display of the filling velocities V1, V2 and V3 and the injection pressures P1, P2 and P3 as they are with time t represented on the abscissa axis. In this case, the injection velocity V1, the screw velocity V2 and the screw velocity V3 rise from the times t1, t2 and t3, respectively, and the velocities are displayed in accordance with the operation timings of the individual injection apparatuses 1, 2 and 3.

On the other hand, the processor 12 adds all of the filling velocities V1, V2 and V3 in accordance with this embodiment of the present invention to calculate characteristic data Dv by the sum total, and this characteristic data is displayed on the display unit 16. While not shown, the injection pressures P1, P2 and P3 are also added in the processor 12 similarly to calculate characteristic data by the sum total which may be displayed similarly.

Further, Fig. 2 diagrammatically represents a display similar to that of Fig. 1 but with a total quantity Q of the material filled successively into the mold represented on the abscissa axis. More particularly, if sectional areas and movement amounts of the screws of the injection apparatuses 1, 2 and 3 are X1, X2 and X3 and S1, S2 and S3, respectively, the total quantity Q of the material filled into the mold 4 can be calculated by the following equation:-$\text{Q = (X1·S1)+(X2·S2)+(X3·S3).}$

The total quantity Q at the beginning of injection of the injection apparatus 1 is zero and the total quantity Q at the beginning of injection of the injection apparatus 2 is Q1 injected from only the injection apparatus 1. The data for the injection apparatus 2 is displayed from Q1. The total quantity is the sum total of material injected from the injection apparatuses 1 and 2 after the total quantity reaches Q1, and the total quantity at the beginning of injection of the injection apparatus 3 is Q2. Consequently, the data for the injection apparatus is displayed from Q2.

Accordingly, with such a display, since the filling velocities V1, V2 and V3 of the injection apparatuses 1, 2 and 3 are all added to be the sum total, the injection situation in accordance with the filled capacity of the mold 4 can be grasped and the molding conditions can be set and changed while looking at the displayed graph of the characteristic data Dv. Further, if the changed data is displayed in overlapped manner to the displayed graph before change, the effects of the changed conditions can be judged collectively in relation to all of the injection apparatuses. The velocity changeover positions of the injection apparatuses 1, 2 and 3 are usually set according to the screw positions of the injection apparatuses 1, 2 and 3, while the positions can be also set according to values of the total quantity Q.

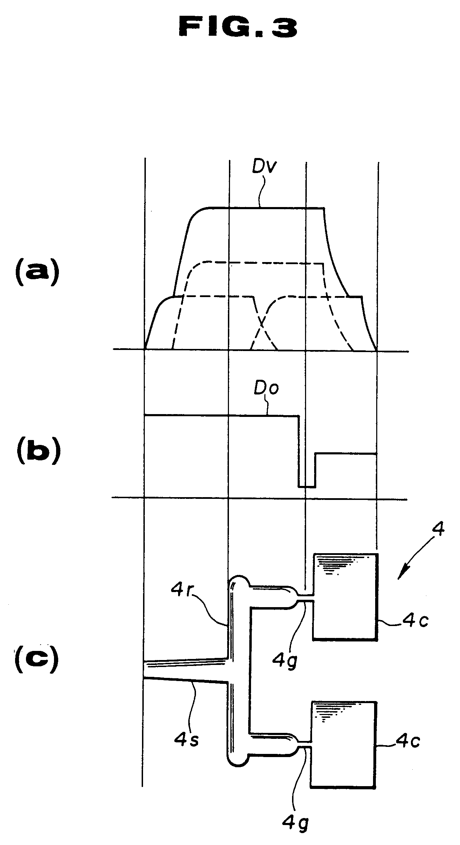

Fig. 3 illustrates a more actual setting method. In Fig. 3, (a) illustrates the characteristic data Dv of the filling velocity calculated in accordance with an embodiment of the present invention, with regard to cavities 4c, gates 4g, a runner 4r and a sprue 4s shown at (c), and shows an ideal filling velocity characteristic Do for the shape of the mold at (b). Actually, the characteristic data Dv and the filling velocity characteristic Do can be displayed on the display unit in an overlapped manner.

Accordingly, it is necessary to reduce the filling velocity of the material to be molded in the vicinity of the gate 4g, while since the actual filling velocity can be grasped at a glance by the characteristic data Dv displayed in accordance with the embodiment of the present invention, the velocity condition of the injection apparatuses 1, 2 and 3 can be set and changed easily. Further, when a burr is formed in the molding portion at the sprue 4s, it is necessary to reduce the filling velocity of the material to be molded in the sprue 4s, while since the actual filling velocity can be grasped at a glance by the characteristic data Dv even in this case, the velocity condition of the injection apparatuses 1, 2 and 3 can be set and changed easily. Other points such as the velocity changeover point and the filling completion point are also detected easily.

Embodiments of the present invention are not limited to the exemplary embodiment described above. For instance, physical quantities other than filling velocity and the injection pressure may be utilised in other embodiments of the present invention. Further, data processing for the characteristic data may include not only display and recording but also necessary operation processing, analysis processing or the like.

A data processing method of an injection molding machine detects predetermined physical quantities, for example filling velocities V1, V2 and V3, relating to operations of a plurality of injection apparatuses successively when different materials to be molded are injected into a cavity of a single mold from a plurality of injection apparatuses to fill the cavity so that molding is performed, calculates a characteristic data concerning the sum total of the detected filling velocities V1, V2 and V3, and processes data on the basis of the characteristic data. The changing value of the characteristic data can be correlated with time or with total quantity of material successively filled into the mold. The data processing includes display processing for displaying the characteristic data with a graph and the displayed characteristic data is utilised for setting the molding condition and the data analysis.

## Claims

1. A method of monitoring operation of an injection molding machine in which different materials to be molded are injected into a cavity of a single mold (4) from a plurality of injection apparatuses (1, 2, 3) to fill the cavity so that molding is performed, the method comprising detecting predetermined physical quantities (V1, V2, V3; P1, P2, P3) relating to operations of the injection apparatuses (1, 2, 3) in the molding operation successively, and calculating characteristic data (Dv) by taking a sum total of the detected physical amounts, and displaying together in graphical form the characteristic data (Dv) and individual data relating to the detected physical quantities.

2. A method according to claim 1, wherein said physical quantities include filling velocities (V1, V2, V3) of material to be molded.

3. A method according to claim 1 or 2, wherein said physical quantities include injection pressures (P1, P2, P3).

4. A method according to claim 1, 2 or 3, wherein the characteristic data Dv is calculated in correlation with the passage of time (t) and is displayed in correlation with the passage of time (t).

5. A method according to claim 1, 2 or 3, wherein the characteristic data Dv is calculated in correlation with the quantity of material (Q) progressively filled into the mold (4) and is displayed in correlation with the quantity of material (Q) progressively filled into the mold (4).

6. An injection molding machine in which different materials to be molded are injected into a cavity of a single mold (4) from a plurality of injection apparatuses (1, 2, 3) of the machine, to fill the cavity so that molding is performed, the machine comprising:-
means (1d, 2d, 3d; 1p, 2p, 3p) for detecting predetermined physical quantities (V1, V2, V3; P1, P2, P3) relating to operations of each of the injection apparatuses (1, 2, 3) individually,
means (12) operable to calculate characteristic data (Dv) by taking a sum total of the detected physical quantities, and
means (16) operable to display together in graphical form the characteristic data (Dv) and individual data relating to the detected physical quantities.

7. A machine as claimed in claim 6, wherein the characteristic data (Dv) is displayed in correlation with the passage of time (t) or in correlation with the quantity of material (Q) progressively filled into the mold (4).

## Patentansprüche

1. Verfahren zum Überwachen des Betriebs einer Spritzgußmaschine, bei der verschiedene Spritzmaterialien aus einer Anzahl Injektionseinrichtungen (1, 2, 3) in den Hohlraum einer einzelnen Form (4) gespritzt werden, so daß der Hohlraum gefüllt wird und ein Spritzguß erfolgt, wobei das Verfahren umfaßt:
das wiederholte Erfassen physikalischer Größen (V1, V2, V3; P1, P2, P3), die sich auf Abläufe der Spritzeinrichtungen (1, 2, 3) beim Spritzvorgang beziehen, und das Berechnen von Kenndaten (Dv) durch Bilden einer Gesamtsumme der erfaßten physikalischen Größen, und das gemeinsame Darstellen der Kenndaten (Dv) und der Individualdaten, die sich auf die erfaßten physikalischen Größen beziehen, in graphischer Form.

2. Verfahren nach Anspruch 1, wobei die physikalischen Größen die Füllgeschwindigkeiten (V1, V2, V3) des Spitzmaterials enthalten.

3. Verfahren nach Anspruch 1 oder 2, wobei die physikalischen Größen die Spritzdrücke (P1, P2, P3) enthalten.

4. Verfahren nach Anspruch 1, 2 oder 3, wobei die Kenndaten (Dv) in bezug auf die Zeitdauer (t) berechnet und in bezug auf die Zeitdauer (t) dargestellt werden.

5. Verfahren nach Anspruch 1, 2 oder 3, wobei die Kenndaten (Dv) in bezug auf die Materialmenge (Q) berechnet werden, die fortschreitend in die Form (4) gefüllt wird, und in bezug auf die Materialmenge (Q) dargestellt wird, die fortschreitend in die Form (4) gefüllt wird.

6. Spritzgußmaschine, in der verschiedene Spitzmaterialien aus einer Anzahl Injektionseinrichtungen (1, 2, 3) der Maschine in den Hohlraum einer einzelnen Form (4) gespritzt werden, so daß der Hohlraum gefüllt wird und ein Spritzgrß erfolgt, wobei die Maschine umfaßt:
Vorrichtungen (1d, 2d, 3d; 1p, 2p, 3p), geeignet zum Erfassen vorgegebenen physikalischer Größen (V1, V2, V3; P1, P2, P3), die sich jeweils auf Abläufe in den jeweiligen Injektionseinrichtungen (1, 2, 3) beziehen,
eine Vorrichtung (12), betreibbar zum Berechnen der Kenndaten (Dv) durch Bilden einer Gesamtsumme der erfaßten physikalischen Größen, und
eine Vorrichtung (16), betreibbar zum gemeinsamen Darstellen der Kenndaten (Dv) und der Individualdaten, die sich auf die erfaßten physikalischen Größen beziehen, in graphischer Form.

7. Maschine nach Anspruch 6, wobei die Kenndaten (Dv) in bezug auf die Zeitdauer (t) dargestellt werden oder in bezug auf die Materialmenge (Q), die fortschreitend in die Form (4) gefüllt wird.

## Revendications

1. Procédé de contrôle du fonctionnement d'une machine de moulage par injection dans laquelle différentes matières devant être moulées sont injectées dans une cavité d'un moule unique (4) depuis plusieurs appareils d'injection (1, 2, 3) afin de remplir la cavité de telle sorte que le moulage est réalisé, le procédé comportant la détection successive de quantités physiques prédéterminées (V1, V2, V3; P1, P2, P3) se rapportant aux fonctionnements des appareils d'injection (1, 2, 3) dans l'opération de moulage, et le calcul de données caractéristiques (Dv) en prenant une somme totale des quantités physiques détectées, et l'affichage sous forme graphique des données caractéristiques (Dv) et de données individuelles se rapportant aux quantités physiques détectées.

2. Procédé selon la revendication 1, selon lequel lesdites quantités physiques comprennent des vitesses de remplissage (V1, V2, V3) de la matière devant être moulée.

3. Procédé selon la revendication 1, selon lequel lesdites quantités physiques comprennent des pressions d'injection (P1, P2, P3).

4. Procédé selon la revendication 1, selon lequel les données caractéristiques Dv sont calculées en corrélation avec le passage du temps (t) et sont affichées en corrélation avec le passage du temps (t).

5. Procédé selon la revendication 1, selon lequel les données caractéristiques Dv sont calculées en corrélation avec la quantité de matière (Q) progressivement versée dans le moule (4) et sont affichées en corrélation avec la quantité de matière (Q) progressivement versée dans le moule (4).

6. Machine de moulage par injection dans laquelle différentes matières devant être moulées sont injectées dans une cavité d'un moule unique (4) depuis plusieurs appareils d'injection (1, 2, 3) de la machine, afin de remplir la cavité de telle sorte que le moulage est réalisé, la machine comportant :
des moyens (1d, 2d, 3d; 1p, 2p, 3p) pour la détection de quantités physiques prédéterminées (V1, V2, V3; P1, P2, P3) se rapportant aux fonctionnements de chacun des appareils d'injection (1, 2, 3) individuellement,
des moyens (12) qui servent au calcul de données caractéristiques (Dv) en prenant une somme totale des quantités physiques détectées, et
des moyens (16) qui servent à l'affichage sous forme graphique des données caractéristiques (Dv) et de données individuelles se rapportant aux quantités physiques détectées.

7. Machine selon la revendication 6, dans laquelle les données caractéristiques Dv sont affichées en corrélation avec le passage du temps (t) ou en corrélation avec la quantité de matière (Q) progressivement versée dans le moule (4).
